# EUROPÄISCHE PATENTSCHRIFT

(11) **EP 4 162 251 B1**
(45) Veröffentlichungstag und Bekanntmachung des Hinweises auf die Patenterteilung: **07.01.2026**
(21) Anmeldenummer: 21732805.3
(22) Anmeldetag: 08.06.2021
(51) Int. Cl.: G01N 3/08

(54) **VERFAHREN UND VORRICHTUNG ZUM VORBEREITEN EINES ZUGTESTS**
METHOD AND DEVICE FOR PREPARING A TENSILE TEST
PROCÉDÉ ET DISPOSITIF DE PRÉPARATION D'UN ESSAI DE TRACTION

(30) Priorität: 08.06.2020 AT 505002020
(43) Veröffentlichungstag der Anmeldung: 12.04.2023
(73) Patentinhaber: TECHNISCHE UNIVERSITÄT WIEN, 1040 Wien (AT)
(72) Erfinder: NALBACH, Mathis, 1090 Wien (AT); THURNER, Philipp, 1130 Wien (AT); SCHITTER, Georg, 1230 Wien (AT)
(74) Vertreter: SONN Patentanwälte GmbH & Co KG
(86) Internationale Anmeldenummer: PCT/AT2021/060199
(87) Internationale Veröffentlichungsnummer: WO 2021/248171

(56) Entgegenhaltungen:
- CN-U- 205 138 897
- DE-A1- 2 525 479
- VAN DER RIJT JOOST A. J. ET AL: "Micromechanical Testing of Individual Collagen Fibrils", MACROMOLECULAR BIOSCIENCE, vol. 6, no. 9, 15 September 2006 (2006-09-15), DE, pages 697 - 702, XP055831391, ISSN: 1616-5187, DOI: 10.1002/mabi.200600063
- YANG L ET AL: "Micromechanical analysis of native and cross-linked collagen type I fibrils supports the existence of microfibrils", JOURNAL OF THE MECHANICAL BEHAVIOR OF BIOMEDICAL MATERIALS, ELSEVIER, AMSTERDAM, NL, vol. 6, 16 November 2011 (2011-11-16), pages 148 - 158, XP028454138, ISSN: 1751-6161, DOI: 10.1016/J.JMBBM.2011.11.008
- SVENSSON R B ET AL: "Viscoelastic behavior of discrete human collagen fibrils", JOURNAL OF THE MECHANICAL BEHAVIOR OF BIOMEDICAL MATERIALS, ELSEVIER, AMSTERDAM, NL, vol. 3, no. 1, 1 January 2010 (2010-01-01), pages 112 - 115, XP026718811, ISSN: 1751-6161, DOI: 10.1016/J.JMBBM.2009.01.005
- CHEN ZHAOXI ET AL: "Measuring flexural rigidity of mullite microfibers using magnetic droplets", JOURNAL OF APPLIED PHYSICS, AMERICAN INSTITUTE OF PHYSICS, US, vol. 117, no. 21, 7 June 2015 (2015-06-07), XP012197859, ISSN: 0021-8979, DOI: 10.1063/1.4921881
- SAVIN THIERRY ET AL: "A method for tensile tests of biological tissues at the mesoscale", JOURNAL OF APPLIED PHYSICS, AMERICAN INSTITUTE OF PHYSICS, US, vol. 111, no. 7, 1 April 2012 (2012-04-01), pages 74704 - 74704, XP012158773, ISSN: 0021-8979, DOI: 10.1063/1.3699176

## Beschreibung

Die Erfindung betrifft ein Verfahren zum Vorbereiten eines Zugtests an einer länglichen, insbesondere faserförmigen Probe, beispielsweise an einer Kollagen-Fibrille, und ein Verfahren zum Durchführen des Zugtests.

Wie René B. Svensson et al in "Viscoelastic behavior of discrete human collagen fibrils" in J Mech Behav Biomed Mater. 2010 Jan; 3(1):112-5, schildern, bilden kollagene Materialien den Großteil der Binde- und Stützgewebe beim Menschen und anderen Säugetieren und sind daher von großer Bedeutung für die biomechanische Integrität der Körper. In diesen kollagenen Geweben lässt sich eine hierarchische Ordnung unterscheiden. Die einzelnen Ebenen der Hierarchie können unterschiedliche mechanische Eigenschaften haben. Eine Sehne ist ein Beispiel für eine solche hierarchische kollagene Struktur mit fünf Ebenen; die ganze Sehne, das Faszikel, das Faser-Bündel, die Kollagenfibrille und das Kollagenmolekül. Während die mechanischen Eigenschaften auf der obersten Hierarchieebene seit Jahrzehnten untersucht werden, gibt es nach wie vor wenige Ergebnisse auf der Ebene der Fibrillen. Svensson et al schlagen nun in diesem Artikel vor, die mechanischen Eigenschaften von Fibrillen mit Hilfe eines Rasterkraftmikroskops (englisch "atomic force microscope", kurz AFM) zu untersuchen. Zu diesem Zweck wird die Fibrille an zwei etwa 50 µm bis 100 µm entfernten Punkten mit Hilfe von Epoxid-Kleber an einem Objektträger befestigt. Nach dem Trocknen des Epoxid-Klebers wird einer dieser beiden Punkte mit einem AFM Cantilever von dem Objektträger gelöst, sodass ein Ende der Fibrille fest mit dem Objektträger verbunden ist. Das andere Ende der Fibrille ist frei beweglich und wird mit einem weiteren kleinen (etwa 10 µm großen) Tropfen Epoxid-Kleber versehen. Das frei bewegliche Ende der Fibrille wird daraufhin mit dem Cantilever verklebt, der wiederum an einem Piezoelement des AFM befestigt ist. Durch Aktivierung des Piezoelements wird die Fibrille gedehnt. Die Auslenkung des Cantilevers wird mit einem Laserdetektor erfasst. Durch Kenntnis der Auslenkung und der Steifigkeit des Cantilevers kann die Steifigkeit der Fibrille berechnet werden.

Dieser Stand der Technik zeigt die grundsätzliche Möglichkeit auf, die mechanischen Eigenschaften von länglichen Proben wie Kollagen-Fibrillen zu untersuchen. Die bekannte Methode ist jedoch kaum praxistauglich. Die Durchführung von Zugversuchen an mikro- und nanoskaligen Fasern in einem flüssigen Medium ist mit dieser Methode nur schwer durchführbar. Dies liegt insbesondere an der oben beschriebenen Fixierung der Fasern an dem Cantilever. Bei der Methode von Svensson et al zur Bestimmung der mechanischen Eigenschaften von nanoskaligen Fasern wird die Probe mittels Epoxid-Kleber an den Kraftsensor geklebt. Dieser Kleber benötigt sehr lange zum Aushärten; in Svensson et al werden 18 Stunden angegeben. Da der Kraftsensor vor dem Kleben kalibriert werden muss und fest in dem AFM eingespannt ist, kann die bekannte Methode nicht parallelisiert werden. Somit können nur zwei bis drei Proben pro Woche untersucht werden.

Van der Rijt Joost A. J. et al., "Micromechanical Testing of Individual Collagen Fibrils", Macromolecular Bioscience, Vol. 6, Nr. 9, 697-702, 2006 und Yang L. et al., "Micromechanical analysis of native and cross-linked collagen type I fibrils supports the existence of microfibrils", Journal of the mechanical behavior of biomedical materials, Vol. 6, 148-158, 2011 offenbaren ebenfalls Methoden zur Durchführung von Zugversuchen, bei denen Proben mit einem Cantilever verklebt werden.

DE 2525479 A1 zeigt eine andersartige Vorrichtung zur Bestimmung der Zugfestigkeit von Metallfolien. Die Metallfolien werden zwischen Einspannklemmen eingeklemmt und von Einspannbacken gehalten.

CN 205 138 897 U offenbart eine Vorrichtung zur Durchführung von Zugversuchen an Fasern mittels eines Kragträgers.

Andersartige Verfahren sind weiters Savin Thierry et al., "A method for tensile tests of biological tissues at the mesoscale", Journal of Applied Physics, Vol. 111, No. 7, 01.04.2012, und Chen Zhaoxi et al., "Measuring flexural rigidity of mullite microfibers using magnetic droplets", Journal of Applied Physics, Vol. 117, No. 21, entnehmbar.

Demnach besteht die Aufgabe der vorliegenden Erfindung darin, zumindest einzelne Nachteile des Standes der Technik zu lindern bzw. zu beheben. Die Erfindung setzt sich insbesondere zum Ziel, eine Vielzahl von länglichen Proben mit geringem Aufwand untersuchen zu können.

Diese Aufgabe wird durch ein Verfahren zum Vorbereiten eines Zugtests mit den Merkmalen von Anspruch 1 und ein Verfahren zum Durchführen eines Zugtests mit den Merkmalen von Anspruch 9 gelöst. Bevorzugte Ausführungsformen sind in den abhängigen Ansprüchen angegeben.

Das erfindungsgemäße Verfahren zum Vorbereiten eines Zugtests an einer länglichen, insbesondere faserförmigen, Probe, beispielsweise an einer Kollagen-Fibrille, umfasst zumindest die folgenden Schritte, bevorzugt in der angegebenen Reihenfolge:
Vorsehen der länglichen Probe,
Anbringen eines Handhabungs-Partikels an der länglichen Probe,
Vorsehen eines Kraftsensors, an dem eine Halterung für das an der länglichen Probe angebrachte Handhabungs-Partikel angeordnet ist,
Handhaben des an der länglichen Probe angebrachten Handhabungs-Partikels mit Hilfe eines Handhabungsgeräts, wobei das Handhabungsgerät eine magnetische Pinzette ist und das Handhabungs-Partikel ein magnetisierbares Material aufweist und das Handhabungs-Partikel über eine Magnetkraft zwischen dem Handhabungsgerät und dem Handhabungs-Partikel geführt wird; und
Verbinden des an der länglichen Probe angebrachten Handhabungs-Partikels mit der am Kraftsensor angeordneten Halterung mit Hilfe des Handhabungsgeräts, wobei zwischen dem HandhabungsPartikel und der Halterung eine formschlüssige Verbindung vorgesehen ist.

Bei der Erfindung wird daher zunächst das Handhabungs-Partikel fest mit der länglichen Probe verbunden. Das Handhabungspartikel wird danach mit dem Handhabungsgerät bewegt, insbesondere angehoben, und mit der Halterung am Kraftsensor verbunden. Zwischen dem Handhabungs-Partikel und der Halterung am Kraftsensor ist eine formschlüssige Verbindung vorgesehen. Somit ist die Verbindung zwischen dem Handhabungs-Partikel und der Halterung frei von Klebstoff. Dies hat weiters den Vorteil, dass das Anbringen des Handhabungs-Partikels an der Halterung des Kraftsensor reversibel lösbar ist. Dieses Verfahren erlaubt eine vorteilhafte Manipulation der länglichen Probe, schließt das Kleben der Probe an den Kraftsensor aus und erlaubt eine Parallelisierung. Zudem kann ein einzelner Kraftsensor für die Messung einer großen Anzahl an Proben verwendet werden, wodurch die Genauigkeit der Messung erhöht wird und die Proben nicht vor jeder Kraftmessung getrocknet werden müssen.

Bevorzugt ist das Handhabungs-Partikel durch einen im Wesentlichen starren Körper, insbesondere aus einem einheitlichen Material, gebildet, so dass das Handhabungs-Partikel bei der Handhabung mit dem Handhabungsgerät und bei der Durchführung des Zugtests mit dem Kraftsensor im Wesentlichen nicht verformt, insbesondere im Wesentlichen nicht gedehnt, wird. Die Erstreckung des Handhabungspartikels senkrecht zur Längsrichtung der länglichen Probe ist bevorzugt größer, insbesondere um ein Mehrfaches größer, als der Durchmesser der länglichen Probe. Dadurch kann die Handhabung des Handhabungs-Partikels wesentlich erleichtert werden.

Bei einer bevorzugten Ausführungsform umfasst das Anbringen des Handhabungs-Partikels an der länglichen Probe das Verkleben, beispielsweise mit Epoxid-Kleber. Durch das Verkleben wird eine feste Verbindung zwischen dem Handhabungs-Partikel und der länglichen Probe geschaffen, welche das Aufnehmen des HandhabungsPartikels samt länglicher Probe mit Hilfe des Handhabungsgeräts und das Verbinden des Handhabungs-Partikels samt länglicher Probe mit der Halterung des Kraftsensors ermöglicht. Andererseits ist es nicht erforderlich, die längliche, insbesondere faserförmige, Probe am Kraftsensor anzukleben. Dies hat den wesentlichen Vorteil, dass mehrere längliche Proben parallel vorbereitet und nacheinander mit demselben Kraftsensor untersucht werden können.

Um die Verbindung zwischen dem Handhabungsgerät und dem Handhabungs-Partikel an der länglichen Probe mit geringem Aufwand und hoher Zuverlässigkeit herstellen und lösen zu können, wird das Handhabungs-Partikel über eine Magnetkraft zwischen dem Handhabungsgerät und dem Handhabungs-Partikel geführt. Im verbundenen Zustand wird das Handhabungs-Partikel ausschließlich durch die Magnetkraft mit dem Handhabungsgerät geführt. Die Magnetkraft ist darauf ausgelegt, dass das Handhabungs-Partikel an der länglichen Probe vom Untergrund, insbesondere von einem Objektträger, mit dem Handhabungsgerät aufgehoben und in die Halterung am Kraftsensor eingelegt werden kann. Die magnetische Verbindung beim Einlegen des Handhabungs-Partikels in die Halterung am Kraftsensor ist bevorzugt kontaktfrei. Demnach wird das Handhabungsgerät bei dieser Ausführung in einem Abstand zu dem Handhabungs-Partikel geführt. In einer bevorzugten Ausführung weist das Handhabungsgerät einen Magneten, insbesondere einen Elektromagneten, und das Handhabungs-Partikel ein magnetisierbares Material auf, welches von dem Magneten angezogen wird. Es können aber auch das Handhabungsgerät und das Handhabungs-Partikel sich anziehende Magneten aufweisen. Weiters kann das Handhabungs-Partikel einen Magneten und das Handhabungsgerät ein magnetisierbares Material aufweisen. Das Handhabungsgerät ist eine magnetische Pinzette (englisch "magnetic tweezer"), wobei das Handhabungs-Partikel ein magnetisierbares Material, insbesondere eine Neodym-Legierung, aufweist. Das magnetisierbare Material kann aber auch ein anderes ferro-, ferri-, para- oder superparamagnetisches Material sein. Magnetische Pinzetten sind in anderem Zusammenhang im Stand der Technik bekannt. Die magnetische Pinzette weist bevorzugt einen Kern, insbesondere aus einer weichmagnetischen MuMetall-Legierung, auf, um welchen bevorzugt Windungen eines insbesondere spulenförmigen Elektromagneten angebracht sind.

Als Handhabungsgerät kann weiters eine Mikroliter- oder Kolbenhubpipette (KHP), kurz Mikropipette, vorgesehen sein. Mit dieser Mikropipette kann das Handhabungs-Partikel aufgenommen werden.

Bei einer bevorzugten Ausführungsform ist als Handhabungs-Partikel ein Kugelelement vorgesehen. Diese Ausführung hat den Vorteil, dass die Auswahl der Größe und Form des Handhabungs-Partikels reproduzierbar ist.

Bevorzugt besteht das Handhabungs-Partikel aus einer Neodym-Legierung, insbesondere in Form eines isotropen magnetischen Pulvers aus einer Nd-Pr-Fe-Co-Ti-Zr-B Legierung. Das Kugelelement weist bevorzugt einen Durchmesser von 30 Mikrometer (µm) bis 50 µm auf.

Zum Anbringen des Handhabungs-Partikels an die längliche Probe, bevorzugt eine Kollagen-Fibrille, wird das Handhabungs-Partikel bei einer bevorzugten Ausführungsform unter Zuhilfenahme magnetischer Kraft in einen Klebstoff, insbesondere Epoxid-Kleber, getunkt und an der Probe angebracht. Die magnetische Kraft muss dabei größer sein als die Kraft zwischen Handhabungs-Partikel und Klebstoff, was durch eine geeignete Materialwahl gewährleistet werden kann. Während des Anbringens haben das HandhabungsPartikel und das Handhabungsgerät physischen Kontakt. Dieser Kontakt wird nach Anbringen des Handhabungs-Partikels gelöst, indem das magnetische Feld des Handhabungs-Gerätes abgestellt wird. Bei Verwendung einer magnetischen Pinzette hat die geringe magnetische Remanenz der MuMetall-Legierung den Vorteil einer geringen magnetischen Kraft zwischen Handhabungs-Gerät und Handhabungs-Partikel, was erst ein Anheben des Handhabungs-Gerätes ohne das Handhabungs-Partikel möglich macht.

Um Nano- oder Mikrofasern zu testen, wird bevorzugt ein Kraftsensor mit Kragträger (Cantilever) verwendet, an welchem die Halterung für das Handhabungs-Partikel an der länglichen Probe vorgesehen ist. Die Durchbiegung des Kragträgers wird insbesondere mit einem Interferometer erfasst. Alternativ kann der Kragträger an einem Rasterkraftmikroskop vorgesehen sein. Bei dieser Ausführung kann die Durchbiegung des Kragträgers mit einem am Kragträger reflektierten und mit einem Photodetektor erfassten Laserstrahl gemessen werden.

Um das Handhabungs-Partikel rasch und zuverlässig an der Halterung des Kraftsensors anbringen zu können, weist die Halterung bei einer bevorzugten Ausführungsform zwei Zinkenelemente mit einer Aussparung dazwischen auf, wobei das Handhabungs-Partikel auf den Zinkenelementen abgelegt und die faserförmige Probe durch die Aussparung zwischen den Zinkenelementen geführt wird. Die Aussparung zwischen den Zinkenelementen weist eine geringere maximale Breite als das Handhabungs-Partikel auf, so dass die faserförmige Probe in die Aussparung zwischen den Zinkenelementen eingefädelt und das Handhabungs-Partikel mittels des Handhabungsgeräts an den Oberseiten der Zinkenelemente abgelegt werden kann. Die Aussparung kann in Draufsicht V-förmig sein.

Das Handhabungsgerät kann manuell oder mit einer Robotereinrichtung bedient werden.

Damit das Handhabungs-Partikel vor Beendigung des Zugtests nicht ungewollt aus der Halterung am Kraftsensor herausrutschen kann, wird das Handhabungs-Partikel bei einer bevorzugten Ausführungsform im mit der Halterung verbundenen Zustand durch Erhebungen insbesondere an den freien Enden der Zinkenelemente gegen ein Herausrutschen aus der Halterung gesichert.

Bei einer bevorzugten Anwendung wird als längliche Probe eine Nano- oder Mikrofaser, vorzugsweise eine Fibrille, beispielsweise eine Kollagen-Fibrille, vorgesehen. Der Durchmesser der Nano- oder Mikrofasern beträgt bevorzugt von 10 nm (Nanometer) bis 50 µm, insbesondere von 50 nm bis 10 µm, beispielsweise von 100 nm bis 300 nm.

Die faserförmige Probe kann für die Zwecke dieser Offenbarung sowohl eine einzelne Faser, beispielsweise eine einzelne Fibrille, als auch ein Bündel von Fasern, beispielsweise ein Bündel von Fibrillen, sein.

Mit dem oben beschriebenen Verfahren werden verschiedenste Anwendungen erschlossen. So können beispielsweise die Auswirkungen von Quervernetzungen innerhalb der Fibrille ("cross-links") untersucht werden, insbesondere in Verbindung mit Diabetes, Wundheilung, Fibrose und Altern. Weiters kann der Zusammenhang von bestimmten kollagenen Geweben mit Herzinfarkten, Schlaganfällen, Nierenleiden, Augenschäden, Lungenfibrosen, Sehnen- und Bänderrissen, Narbenbildungen und Osteoporose untersucht werden. Darüber hinaus gibt es eine große Anzahl an synthetischen und Natur-Nanofasern, wie Zellulosefasern, Polymerfasern (Elektrospinnen), Seide oder Viskose, bei denen das vorliegende Verfahren dazu genutzt werden kann, die mechanischen Eigenschaften dieser Fasern zu bestimmen.

Bei einer bevorzugten Anwendung, beispielsweise bei der Untersuchung von Fibrillen, ist es günstig, wenn sich die faserförmige Probe im mit der Halterung verbundenen Zustand bevorzugt vollständig innerhalb einer Flüssigkeit befindet. Somit kann der Zugtest an der länglichen Probe in der Flüssigkeit durchgeführt werden. Dies hat den Vorteil, dass die Eigenschaften von Fibrillen oder anderen biologischen Fasern unter physiologischen Bedingungen getestet werden können.

Bei dem Verfahren zum Durchführen eines Zugtests an einer länglichen, insbesondere faserförmigen, Probe, werden zumindest die folgenden Schritte durchgeführt:
Vorbereiten des Zugtests nach einer der oben geschilderten Ausführungsvarianten,
Durchführen des Zugtests mit dem Kraftsensor, wobei die faserförmige Probe gedehnt wird.

Zur Dehnung der länglichen Probe kann der Kraftsensor mit Hilfe eines Stellelements, beispielsweise eines Piezoelements, um eine vorgegebene Strecke bewegt werden. Bevorzugt wird eine Auslenkung eines Kragträgers des Kraftsensors aufgrund des daran angebrachten Handhabungs-Partikels erfasst. Diese Ausführung hat insbesondere den Vorteil, dass eine starke Streckung der länglichen Probe erzielt werden kann, um die längliche Probe bis zur Reißgrenze zu testen. Alternativ kann der Kraftsensor mit dem Kragträger ortsfest angeordnet sein. Bei dieser Ausführungsform kann das dem Handhabungs-Partikel gegenüberliegende Ende der länglichen Probe an einem Objektträger fixiert sein, wobei der Objektträger mit Hilfe eines Stellelements, beispielsweise mit Hilfe eines Piezoelements, um eine vorgegebene Strecke bewegt wird.

Beim Durchführen des Zugtests mit dem Kraftsensor kann ein Kraft-Weg- oder Kraft-Zeit-Diagramm aufgenommen werden.

Weiters kann der Zugtest mit einem Regelkreis kraft- und dehnungskontrolliert durchgeführt werden. Dadurch ist auch dynamisch mechanisches Testen möglich.

Nach dem Durchführen des Zugtests kann die faserförmige Probe mit Hilfe des Handhabungsgeräts von der Halterung am Kraftsensor entfernt werden. Dafür wird das Handhabungs-Partikel mit Hilfe des Handhabungsgeräts von dem Kraftsensor wegbewegt, insbesondere über eine Magnetkraft zwischen dem Handhabungsgerät und dem Handhabungs-Partikel. Somit kann der Kraftsensor besonders rasch und unkompliziert von der länglichen Probe befreit werden, um die Zugtests an anderen länglichen Proben zu ermöglichen. Vorteilhafterweise kann die Testkapazität gegenüber dem Stand der Technik wesentlich gesteigert werden.

Eine Vorrichtung zum Durchführen eines Zugtests an einer länglichen, insbesondere faserförmigen, Probe, beispielsweise an einer Kollagen-Fibrille, weist einen Kraftsensor mit einer Halterung zum Verbinden mit einem an der länglichen Probe angebrachten Handhabungs-Partikel auf, wobei die Halterung für eine formschlüssige Verbindung mit dem Handhabungs-Partikel eingerichtet ist.

Zur Vorbereitung des Zugtests ist das Handhabungs-Partikel an der länglichen Probe mit der Halterung des Kraftsensors verbunden.

Bei einer bevorzugten Ausführungsform weist die Halterung des Kraftsensors zwei Zinkenelemente mit einer Aussparung dazwischen auf. An der Oberseite der Zinkenelemente sind Ablageflächen für das Handhabungs-Partikel ausgebildet. Wenn die Aussparung schmäler als das Handhabungs-Partikel ist, kann zwar die faserförmige Probe, aber nicht das Handhabungs-Partikel durch die Aussparung durchtreten. Dadurch wird das Handhabungs-Partikel von den Zinkenelementen mitgenommen, wenn der Kraftsensor beim Zugtest bewegt wird. Die Länge der Zinkenelemente beträgt bevorzugt von 10 nm bis 1 mm, insbesondere von 10 µm bis 500 µm, beispielsweise im Wesentlichen 100 µm.

Bei einer bevorzugten Ausführungsform weist der Kraftsensor einen Kragträger auf, wobei bevorzugt ein Interferometer zur Erfassung eines Biegezustands des Kragträgers vorgesehen ist.

Die Erfindung wird im Folgenden anhand eines bevorzugten Ausführungsbeispiels weiter erläutert, welches in den Zeichnungen dargestellt ist.
Fig. 1 zeigt eine Vorrichtung zum Durchführen eines Zugtests an einer faserförmigen Probe.
Fig. 2 bis 7 zeigen den Ablauf des Zugtests.
Fig. 8 zeigt eine Drauf- und Fig. 9 eine Vorderansicht eines Details der Vorrichtung von Fig. 1.
Fig. 10 bis 13 zeigen schematisch die Vorbereitung der faserförmigen Probe für den Zugtest gemäß den Fig. 2 bis 7.
Fig. 14 zeigt ein Kraft-Zeit-Diagramm, welches bei der Zugprüfung eines Bündels von Kollagen-Fibrillen aufgenommen wurde.
Fig. 15 zeigt einen Ausschnitt aus dem Kraft-Zeit-Diagramm der Fig. 14.

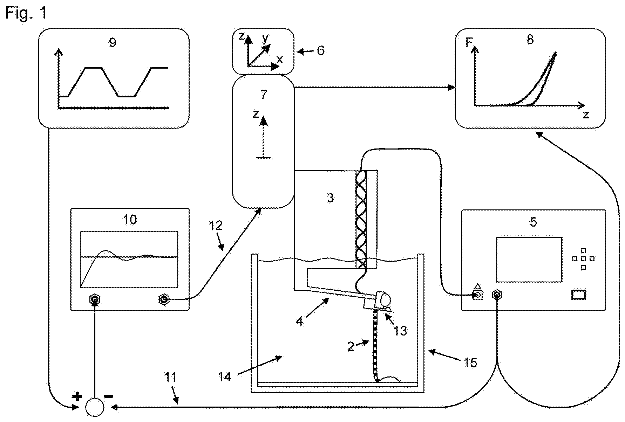

Fig. 1 zeigt schematisch eine Vorrichtung 1 zum Durchführen eines Zugtests an einer faserförmigen Probe 2, bei welcher es sich bevorzugt um eine Nano- oder Mikrofaser, insbesondere eine Fibrille, beispielsweise eine Kollagen-Fibrille, handelt.

Die Vorrichtung 1 weist einen Kraftsensor 3 mit einem Kragträger (Cantilever) 4 auf. Mit Hilfe eines Interferometers 5 kann ein Biegezustand, hier eine Auslenkung, des Kragträgers 4 erfasst werden. Der Kraftsensor 3 ist mit einer Positioniereinrichtung 6 verbunden, mit welcher der Kraftsensor 3 in alle drei Raumrichtungen x, y, z bewegt werden kann. Die Positioniereinrichtung dient zur groben Positionierung des Kraftsensors 3. Weiters ist ein Stellelement 7, vorzugsweise ein Piezoelement, beispielsweise ein Piezo-Hebelaktor, vorgesehen, mit welchem der Kraftsensor zur Durchführung des Zugtests verstellt, hier in z-Richtung auf- und ab bewegt wird. Aus dem Signal des Stellelements 7 und des Interferometers 5 wird ein Output-Signal 8, insbesondere ein Kraft-Weg-Diagramm oder ein Kraft-Zeit-Diagramm, erstellt. Der Zugtest wird über ein Input-Signal 9 gesteuert. In der gezeigten Ausführung ist zudem ein Regelelement 10 vorgesehen, welcher aus dem Input-Signal 9 und einem Feedback-Signal 11 ein Steuersignal 12 für das Stellelement 7 bildet. In der gezeigten Ausführung weist der Kraftsensor 3 eine Halterung 13 auf, welche - wie nachstehend im Detail erläutert wird - mit der faserförmigen Probe 2 verbunden wird, die sich in einer mit Flüssigkeit 14 gefüllten Flüssigkeitszelle 15 befindet.

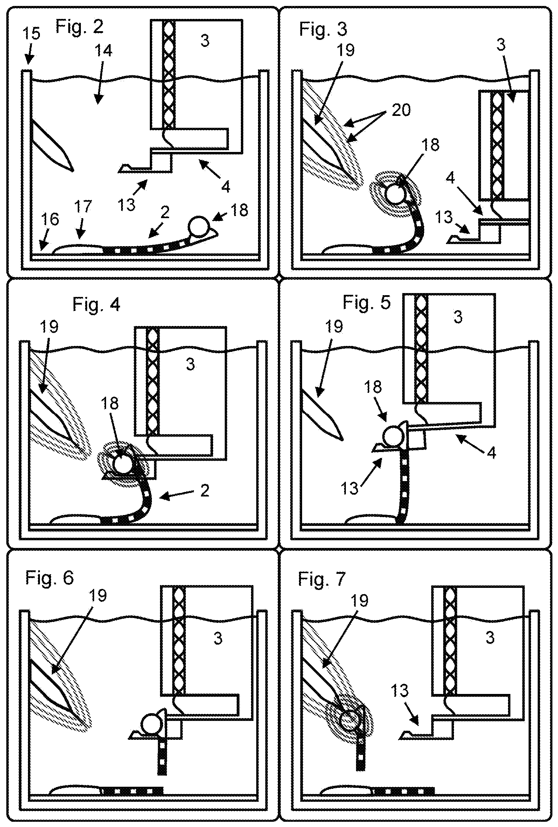

Fig. 2 bis 7 zeigen die einzelnen Schritte des Zugtests.

Wie aus Fig. 2 ersichtlich, wird die faserförmige Probe 2 auf einem Objektträger 16 in der Flüssigkeitszelle 15 angeordnet. Das eine Ende der faserförmigen Probe 2 ist über eine Klebstoffmasse 17 am Objektträger 16 fixiert. Das andere Ende der faserförmigen Probe 2 ist mit einem Handhabung-Partikel 18 versehen, welches in der gezeigten Ausführung durch ein Kugelelement gebildet ist.

Im nächsten Schritt - Fig. 3 - wird ein Handhabungsgerät 19 mit dem Handhabungs-Partikel 18 an der faserförmigen Probe 2 verbunden. In der gezeigten Ausführung werden das Handhabungsgerät 19 und das Handhabungs-Partikel 18 magnetisch miteinander gekoppelt. Hierfür kann das Handhabungsgerät 19 eine magnetische Pinzette ("magnetic tweezer") sein, welche im eingeschalteten Zustand (vgl. die symbolischen Magnetfeldlinien 20 in Fig. 2) ein magnetisierbares Material, insbesondere eine Neodym Legierung, des Handhabungs-Partikels 18 anzieht.

Im nächsten Schritt - Fig. 4 - wird das Handhabungs-Partikel 18 an der faserförmigen Probe 2 durch Bewegen des Handhabungsgeräts 19 mit der Halterung 13 des Kraftsensors 3 verbunden.

Im nächsten Schritt - Fig. 5 - kann das Handhabungsgerät 19 entfernt und der Zugtest durchgeführt werden. Dafür kann das Stellelement 7 entsprechend dem Input-Signal 9 den Kraftsensor 3 mit dem Kragträger 4 bewegen. Aufgrund der Verbindung des Handhabungs-Partikels 18 an der faserförmigen Probe 2 mit der Halterung 13 des Kraftsensors 3 wird die faserförmige Probe 2 durch die Bewegung des Kraftsensors 3 gedehnt, so dass eine Kraft auf den Kragträger 4 des Kraftsensors 3 ausgeübt wird. Wie zuvor beschrieben, wird die Auslenkung des Kragträgers 4 interferometrisch erfasst, um das Kraft- und Dehnverhalten der faserförmigen Probe 2 zu bestimmen.

Wie in Fig. 6 angedeutet wird, kann der Zugversuch durch ein Abreißen der faserförmigen Probe 2 beendet werden.

Im letzten Schritt - Fig. 7 - kann das Handhabungspartikel 18 mit einem Teil der faserförmigen Probe 2 mit Hilfe des Handhabungsgeräts 19 aus der Halterung 13 des Kraftsensors 3 entfernt werden. Somit ist die Vorrichtung 1 für den nächsten Zugtest bereit.

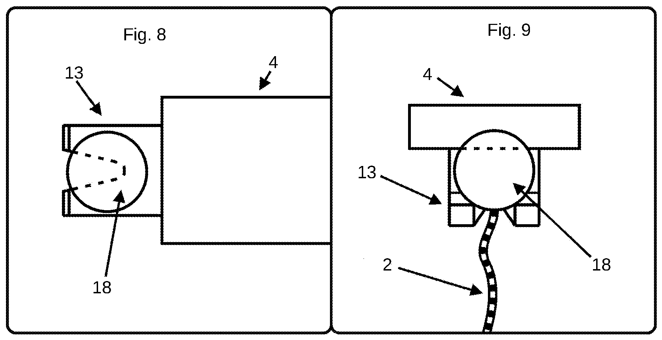

Fig. 8 und Fig. 9 zeigen im Detail die Verbindung des Handhabungs-Partikels 18 an der faserförmigen Probe 2 mit der Halterung 13 des Kraftsensors 3. Demzufolge weist die Halterung 13 zwei Zinkenelemente 21 auf, zwischen denen eine Aussparung 22 ausgebildet ist. Das Handhabungs-Partikel 18 wird auf den Zinkenelementen 21 abgelegt, wohingegen die faserförmige Probe 2 durch die Aussparung 22 zwischen den Zinkenelementen geführt wird. An den freien Enden der Zinkenelemente 21 sind Erhebungen 23 ausgebildet, welche das Handhabungs-Partikel 18 gegen ein Herausrutschen aus der Halterung 13 sichern.

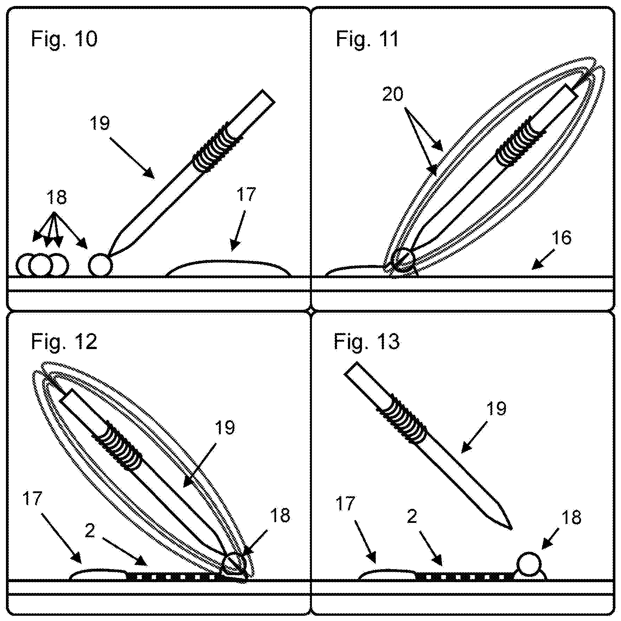

Fig. 10 bis 13 veranschaulichen die Vorbereitung der faserförmigen Probe für den Zugtest gemäß den Fig. 2 bis 7. Demnach wird ein Handhabungs-Partikel 18 aus einem Vorrat von Handhabungspartikeln 18 mit Klebstoff 17, insbesondere Epoxid-Kleber, versehen (Fig. 10), mit dem Handhabungsgerät 19 aufgenommen (Fig. 11) und mit dem einen Ende der faserförmigen Probe 2 verklebt (Fig. 12), wobei das andere Ende der faserförmigen Probe 2 mit Klebstoff 17 auf dem Objektträger 16 angeordnet ist. Nach Aushärten des Klebstoffes wird das Ende der faserförmigen Probe, welches mit dem Handhabungs-Partikel 18 verklebt ist, bevorzugt mit einer feinen nadelförmigen Spitze von dem Objektträger gelöst. Abschließend ist die faserförmige Probe 2 mit dem Handhabungs-Partikel 18 bereit für die Zugprüfung (Fig. 13).

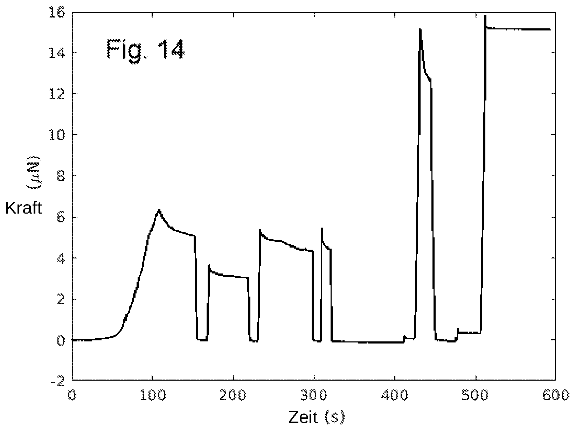

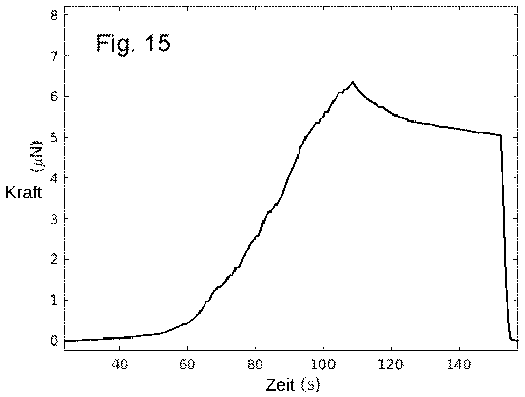

Fig. 14 zeigt ein Kraft-Zeit-Diagramm, welches bei der Zugprüfung eines Kollagen-Fibrillenbündels mit der zuvor beschriebenen Vorrichtung 1 aufgenommen wurde. Demnach wird die Kraft aufgrund der Dehnung der Kollagen-Fibrille an der Halterung 13 des Kraftsensors 3 gemessen, wenn der Kraftsensor 3 mit Hilfe des Stellelements 7 um vorgegebene Distanzen bewegt wird. Im gezeigten Beispiel wird das Kollagen-Fibrillenbündel um unterschiedliche Distanzen mehrmals gedehnt. Ganz rechts wird ein Abriss der Kollagen-Fibrille bei der letzten Dehnung angedeutet. In Fig. 15 ist ein Ausschnitt des Kraft-Zeit-Diagramms zu sehen. Aus den Kurven ist erkennbar, dass das mechanische Verhalten der Kollagen-Fibrille von einer elastischen Verformung nach dem Hook'schen Gesetz abweicht. Mit der vorliegenden Testvorrichtung kann auch ein visko-elastisches oder visko-plastisches Verhalten erfasst werden.

## Patentansprüche

1. Verfahren zum Vorbereiten eines Zugtests an einer länglichen, insbesondere faserförmigen Probe (2), beispielsweise an einer Kollagen-Fibrille, mit den Schritten:
Vorsehen der länglichen Probe (2),
Anbringen eines Handhabungs-Partikels (18) an der länglichen Probe (2),
Vorsehen eines Kraftsensors (3), an dem eine Halterung (13) für das an der länglichen Probe (2) angebrachte Handhabungs-Partikel (18) angeordnet ist,
Handhaben des an der länglichen Probe (2) angebrachten Handhabungs-Partikels (18) mit Hilfe eines Handhabungsgeräts (19), wobei das Handhabungsgerät (19) eine magnetische Pinzette ist und das Handhabungs-Partikel (18) ein magnetisierbares Material aufweist und das Handhabungs-Partikel (18) über eine Magnetkraft zwischen dem Handhabungsgerät (19) und dem Handhabungs-Partikel (18) geführt wird; und
Verbinden des an der länglichen Probe (2) angebrachten Handhabungs-Partikels (18) mit der am Kraftsensor (3) angeordneten Halterung (13) mit Hilfe des Handhabungsgeräts (19), wobei zwischen dem Handhabungs-Partikel (18) und der Halterung (13) eine formschlüssige Verbindung vorgesehen ist.

2. Verfahren nach Anspruch 1, **dadurch gekennzeichnet, dass** das Anbringen des Handhabungs-Partikels (18) an der länglichen Probe (2) das Verkleben, beispielsweise mit Epoxidharz, umfasst.

3. Verfahren nach Anspruch 1 oder Anspruch 2, **dadurch gekennzeichnet, dass** das Handhabungs-Partikel (18) eine Neodym-Legierung, aufweist.

4. Verfahren nach einem der Ansprüche 1 bis 3, **dadurch gekennzeichnet, dass** als Handhabungs-Partikel (18) ein Kugelelement vorgesehen ist.

5. Verfahren nach einem der Ansprüche 1 bis 4, **dadurch gekennzeichnet, dass** der Kraftsensor (3) einen Kragträger (4) aufweist, an welchem die Halterung (13) für das an der länglichen Probe (2) angebrachte Handhabungs-Partikel (18) vorgesehen ist.

6. Verfahren nach einem der Ansprüche 1 bis 5, **dadurch gekennzeichnet, dass** die Halterung (13) zwei Zinkenelemente (21) mit einer Aussparung (22) dazwischen aufweist, wobei das Handhabungs-Partikel (18) auf den Zinkenelementen (21) abgelegt und die faserförmige Probe (2) durch die Aussparung (22) zwischen den Zinkenelementen (21) geführt wird.

7. Verfahren nach Anspruch 6, **dadurch gekennzeichnet, dass** das Handhabungs-Partikel (18) im mit der Halterung (13) verbundenen Zustand durch Erhebungen (23) insbesondere an den freien Enden der Zinkenelemente (21) gegen ein Herausrutschen aus der Halterung (13) gesichert wird.

8. Verfahren nach einem der Ansprüche 1 bis 7, **dadurch gekennzeichnet, dass** als faserförmige Probe (2) eine Nano- oder Mikrofaser, vorzugsweise eine Fibrille, beispielsweise eine KollagenFibrille, vorgesehen wird; und/oder dass sich die faserförmige Probe (2) im mit der Halterung (13) verbundenen Zustand in einer Flüssigkeit (14) befindet.

9. Verfahren zum Durchführen eines Zugtests an einer länglichen Probe (2), mit den Schritten:
Vorbereiten des Zugtests mit dem Verfahren nach einem der Ansprüche 1 bis 8,
Durchführen des Zugtests mit dem Kraftsensor (3), wobei die faserförmige Probe (2) gedehnt wird.

10. Verfahren nach Anspruch 9, **gekennzeichnet durch**
Aufnehmen eines Kraft-Weg- oder Kraft-Zeit-Diagramms beim Durchführen des Zugtests mit dem Kraftsensor (3).

11. Verfahren nach Anspruch 9 oder 10, **dadurch gekennzeichnet, dass** die faserförmige Probe (2) nach dem Durchführen des Zugtests mit Hilfe des Handhabungsgeräts (19) von der Halterung (13) am Kraftsensor (3) entfernt wird.

## Claims

1. A method for preparing a tensile test on an elongated, in particular fibrous specimen (2), for example on a collagen fibril, with the steps of:
providing the elongated specimen (2),
attaching a manipulating particle (18) to the elongated specimen (2),
providing a force sensor (3) on which a retainer (13) for the manipulating particle (18) on the elongated specimen (2) is arranged,
manipulating the manipulating particle (18) on the elongated specimen (2) by means of a manipulating device (19),
wherein the manipulating device (19) is a pair of magnetic tweezers, wherein the manipulating particle (18) has a magnetisable material and the manipulating particle (18) is guided by means of a magnetic force between the manipulating device (19) and the manipulating particle (18); and
connecting the manipulating particle (18) on the elongated specimen (2) to the retainer (13) on the force sensor (3) with the aid of the manipulating device (19), wherein between the manipulating particle (18) and the retainer (13) an interlocking connection is provided.

2. The method as claimed in claim 1, **characterized in that** the attachment of the manipulating particle (18) to the elongated specimen (2) comprises adhesion, for example with epoxy resin.

3. The method as claimed in claim 1 or claim 2, **characterized in that** the manipulating particle (18) comprises a neodymium alloy.

4. The method as claimed in one of claims 1 to 3, **characterized in that** a spherical element is provided as the manipulating particle (18).

5. The method as claimed in one of claims 1 to 4, **characterized in that** the force sensor (3) has a cantilever (4) on which the retainer (13) for the manipulating particle (18) on the elongated specimen (2) is provided.

6. The method as claimed in one of claims 1 to 5, **characterized in that** the retainer (13) has two prong elements (21) with a recess (22) between them, wherein the manipulating particle (18) is placed on the prong elements (21) and the fibrous specimen (2) is guided through the recess (22) between the prong elements (21).

7. The method as claimed in claim 6, **characterized in that** when it is in the state in which it is connected to the retainer (13), the manipulating particle (18) is secured against slipping out of the retainer (13) by means of prominences (23), in particular at the free ends of the prong elements (21).

8. The method as claimed in one of claims 1 to 7, **characterized in that** a nanofibre or microfibre, preferably a fibril, for example a collagen fibril, is provided as the fibrous specimen (2); and/or that the fibrous specimen (2) is located in a liquid (14) in the state in which the fibrous specimen (2) is connected to the retainer (13).

9. A method for carrying out a tensile test on an elongated specimen (2), with the steps of:
preparing the tensile test with the method as claimed in one of claims 1 to 8,
carrying out the tensile test with the force sensor (3), wherein the fibrous specimen (2) is stretched.

10. The method as claimed in claim 9, **characterized by** recording a force-displacement diagram or force-time diagram when carrying out the tensile test with the force sensor (3).

11. The method as claimed in claim 9 or claim 10, **characterized in that** after carrying out the tensile test, the fibrous specimen (2) is removed from the retainer (13) on the force sensor (3) with the aid of the manipulating device (19).

## Revendications

1. Procédé de préparation d'un essai de traction sur un échantillon allongé, notamment filiforme (2), par exemple sur une fibrille de collagène, comprenant les étapes suivantes:
fournir l'échantillon allongé (2),
fixer une particule de manipulation (18) sur l'échantillon allongé (2),
fournir un capteur de force (3) sur lequel est disposé un support (13) pour la particule de manipulation (18) fixée à l'échantillon allongé (2),
manipuler la particule de manipulation (18) fixée à l'échantillon allongé (2) à l'aide d'un dispositif de manipulation (19), ledit dispositif de manipulation (19) étant une pince magnétique et ladite particule de manipulation (18) comprenant un matériau magnétisable, et ladite particule de manipulation (18) étant guidée par une force magnétique entre le dispositif de manipulation (19) et la particule de manipulation (18); et
relier la particule de manipulation (18) fixée à l'échantillon allongé (2) au support (13) disposé sur le capteur de force (3) à l'aide du dispositif de manipulation (19), une connexion par complémentarité de forme étant prévue entre la particule de manipulation (18) et le support (13).

2. Procédé selon la revendication 1, **caractérisé en ce que** la fixation de la particule de manipulation (18) sur l'échantillon allongé (2) comprend le collage, par exemple avec de la résine époxy.

3. Procédé selon la revendication 1 ou la revendication 2, **caractérisé en ce que** la particule de manipulation (18) comprend un alliage de néodyme.

4. Procédé selon l'une quelconque des revendications 1 à 3, **caractérisé en ce qu'**un élément de forme sphérique est prévu comme particule de manipulation (18).

5. Procédé selon l'une quelconque des revendications 1 à 4, **caractérisé en ce que** le capteur de force (3) comprend une poutre en porte-à-faux (4) sur laquelle est prévu le support (13) pour la particule de manipulation (18) fixée à l'échantillon allongé (2).

6. Procédé selon l'une quelconque des revendications 1 à 5, **caractérisé en ce que** le support (13) comprend deux éléments en forme de dent (21) avec un évidement (22) entre eux, la particule de manipulation (18) étant déposée sur les éléments en forme de dent (21) et l'échantillon filiforme (2) étant guidé à travers l'évidement (22) entre les éléments en forme de dent (21).

7. Procédé selon la revendication 6, **caractérisé en ce que** la particule de manipulation (18), dans l'état relié au support (13), est sécurisée contre le glissement hors du support (13) par des saillies (23), notamment aux extrémités libres des éléments en forme de dent (21).

8. Procédé selon l'une quelconque des revendications 1 à 7, **caractérisé en ce qu'**une nanofibre ou une microfibre, de préférence une fibrille, par exemple une fibrille de collagène, est prévue comme échantillon filiforme (2); et/ou **en ce que** l'échantillon filiforme (2), dans l'état relié au support (13), se trouve dans un liquide (14).

9. Procédé pour réaliser un essai de traction sur un échantillon allongé (2), comprenant les étapes suivantes:
préparer l'essai de traction selon le procédé de l'une quelconque des revendications 1 à 8,
réaliser l'essai de traction avec le capteur de force (3), l'échantillon filiforme (2) étant étiré.

10. Procédé selon la revendication 9, **caractérisé par** l'enregistrement d'un diagramme force-déplacement ou force-temps lors de la réalisation de l'essai de traction avec le capteur de force (3).

11. Procédé selon la revendication 9 ou 10, **caractérisé en ce que** l'échantillon filiforme (2) est retiré du support (13) sur le capteur de force (3) à l'aide du dispositif de manipulation (19) après la réalisation de l'essai de traction.
